Europäisches Patentamt

European Patent Office

Office européen des brevets

(11) Publication number: **0 365 399 B1**

# EUROPEAN PATENT SPECIFICATION

(45) Date of publication of patent specification: **15.11.95**   (51) Int. Cl.⁶: **C08J 3/22**, //C08L23:12

(21) Application number: **89402815.8**

(22) Date of filing: **12.10.89**

The file contains technical information submitted after the application was filed and not included in this specification

(54) **A pigment master batch for filler-containing polypropylene compositions.**

(30) Priority: **15.10.88 JP 260300/88**

(43) Date of publication of application:
**25.04.90 Bulletin 90/17**

(45) Publication of the grant of the patent:
**15.11.95 Bulletin 95/46**

(84) Designated Contracting States:
**DE FR GB IT**

(56) References cited:
EP-A- 0 042 627
FR-A- 2 371 476
GB-A- 1 108 298
US-A- 3 767 444
US-A- 4 309 323

DATABASE WPIL, abs.no.88-177765, Derwent Publications Ltd, London, GB & JP-A-63113057

(73) Proprietor: **SUMITOMO CHEMICAL COMPANY, LIMITED**
**5-33 Kitahama 4-chome,**
**Chuo-ku**
**Osaka-shi,**
**Osaka (JP)**

(72) Inventor: **Fujii, Takeshi**
**2848-19, Sodegauracho-Kubota**
**Kimitsu-gun**
**Chiba 299-02 (JP)**
Inventor: **Mitsuno, Tatsuyuki**
**3-9-7-204, Kurosuna**
**Chiba-shi**
**Chiba 281 (JP)**
Inventor: **Hori, Shinichi**
**C-717, 19 Mihogaoka**
**Ibaraki-Shi**
**Osaka 567 (JP)**
Inventor: **Fukuda, Katsuyasu**
**2926, Sakicho**
**Nara-shi**
**Nara 630 (JP)**
Inventor: **Kurioka, Yukio**
**240-1-1203, Nishino 1-chome**
**Itami-shi**
**Hyogo 664 (JP)**

(74) Representative: **Bourgognon, Jean-Marie et al**
**Cabinet Flechner**
**22, Avenue de Friedland**
**F-75008 Paris (FR)**

## Description

The present invention relates to a coloring agent used for filler-containing thermoplastic resin compositions, namely, a pigment master batch, and also relates to a filler-containing thermoplastic resin composition in which the pigment master batch is incorporated. This pigment master batch, which is superior in pigment dispersibility and does not damage properties of thermoplastic resin compositions such as rigidity, heat resistance and impact resistance, is suitable for coloration of filler-containing polypropylene resin compositions.

As coloring agents for filler-containing thermoplastic resin compositions, there are generally used dry colors comprising pigment and metallic soaps such as zinc stearate and magnesium stearate as dispersion media, master powders comprising pigment and wax or fatty acid as dispersion media and master batches comprising these dry colors or master powders and thermoplastic resins such as polyethylene and polypropylene.

Generally, in order to obtain colored filler-containing thermoplastic resin compositions, fillers, coloring agents and thermoplastic resins are simultaneously blended and melt kneaded by an extruder, Banbury mixer or kneader.

However, in the case of dry colors or master powders, their pigment dispersant is adsorbed to fillers in a melt kneading step, and thus pigment dispersibility is insufficient even if a high-performance kneading machine such as a twin-screw extruder and a Banbury mixer are used. This insufficient dispersion of pigments causes reduction in color density, uneven coloration and deterioration of properties, and as a result commercial value of products is much lowered.

For improving these defects, coloration is carried out by use of a pigment master batch. For instance JP-A-63 113 057 provides a pigment masterbatch for regular colouring of high filler-containing thermoplastics resins, whereby the mechanical properties of the resin to be coloured are not injured.

The masterbatches essentially comprise

10-30% polypropylene or propylene copolymer with MFR 0.1 to 100;
10-80% pigments
10-50% pigment dispersent, eg PE-wax, PP-wax.

But even in this case, conventional pigment master batches are not enough to obtain sufficient pigment dispersibility and cannot satisfy the recent very high demands for appearance and balance in properties of molded articles.

Objects of the present invention are to provide a pigment master batch for filler-containing polypropylene resin compositions and to provide a filler-containing polypropylene resin composition which is excellent in pigment dispersibility and improved in balance of properties and can be used even in the industrial field of automobile parts and electric and electronic parts which require heat resistance and impact resistance at a high level.

The process according to the invention is defined in claim 1. Improvements of the process are characterized in the appendant claims 2 to 5.

The present invention also relates to a filler-containing polypropylene composition in which the pigment master batch obtained by the proess according to claim 1 is incorporated.

The polypropylene used in the pigment master batch of the present invention is a crystalline propylene homopolymer. So-called block polypropylene is inferior in pigment dispersibility and random polypropylene is inferior in rigidity and hardness.

This propylene homopolymer preferably has a melt flow rate (hereinafter referred to as "MFR" and measured by the method specified in JIS-K7210 at 230°C under a load of 2.16 kg) of at least 10 g/10 min., preferably 15 - 100 g/10 min. If MFR 230/2 is less than 10 g/10 min., the polymer is inferior in pigment dispersibility.

Next, the pigments used in the present invention are those which have been conventionally used for coloration of synthetic resins such as polyolefins, and thus are not critical.

Typical examples of the pigments are polyazo pigments, phthalocyanine pigments, perylene·perinone pigments, carbon black, titanium oxide, ultramarine and red oxide. These pigments may be used alone or in combination of two or more.

Dispersion media for the pigments include, for example, metallic salts such as calcium, magnesium, aluminum and zinc salts of higher fatty acids such as stearic acid and lauric acid; calcium stearate and calcium laurate being preferred. polyethylene wax prepared by heat decomposition of known polyethylene under suitable conditions to adjust its molecular weight to 500 - 20,000 or by polymerizing ethylene into polyethylene of a molecular weight of 500 - 20,000 under suitable conditions; or polypropylene wax prepared by heat decomposition of known polypropylene or polymerization of propylene to have a molecular weight of 1,000 - 20,000. These may be used alone or in combination of two or more.

Examples of fillers are talc, (heavy or light) calcium carbonate, mica, glass fiber, barium sulfate, calcium silicate, clay, silica, aluminum hydroxide, magnesium hydroxide, carbon fiber and potassium titanate fiber. These may be used alone or in combination of two or more. Preferred are talc, calcium carbonate, and mica from the point of their properties.

Polypropylene resins used for the filler-containing polypropylene compositions are suitably homopolymers of propylene and crystalline copolymer resins of propylene with an $\alpha$-olefin other than propylene or ethylene.

The polypropylene resins comprise propylene of the majority of the constitutive units thereof, and specific examples are crystalline propylene ethylene block or random copolymers, crystalline propylene butene block or random copolymers, and crystalline propylene ethylene butene copolymers. Especially preferred are crystalline propylene ethylene block copolymers of 30% by weight or less in ethylene content. Furthermore, synthetic rubbers such as ethylene•propylene copolymer rubbers (e.g., EPM, EPDM), styrene•butadiene copolymer rubbers (e.g., SBR, SBS block copolymer) and hydrogenated products thereof, isoprene rubber, and isoprene isobutylene rubber may also be used in combination with the above-mentioned polypropylene resin.

The filler-containing polypropylene resin compositions used in the present invention are those which comprises the above-mentioned polypropylene resin, the above-mentioned filler and, if necessary, the above-mentioned synthetic rubber and can be obtained by melt kneading them by an extruder, Banbury mixer, or kneader. Furthermore, the composition may contain an anti-oxidant, a lubricating agent, an antistatic agent, a light stabilizer, an ultraviolet absorber as an additional component.

For production of the pigment master batch of the present invention, known methods can be employed as they are. 30 - 70 parts by weight of a dispersant is added to 100 parts by weight of a neat pigment (raw pigment), followed by grinding and mixing at a high speed by a mixing means such as Henschel mixer, then the resulting processed pigment is added in an amount of 30 - 200 parts by weight to 100 parts by weight of propylene homopolymer, and the resulting mixture is melt kneaded by an ordinary kneading machine such as a single-screw extruder, twin-screw extruder, Banbury mixer, kneader or roll under heating and is made into pellets which are then subjected to processing.

Methods for molding the filler-containing polypropylene resin composition in which the pigment master batch of the present invention is incorporated are not critical. The composition is suitable for extrusion molding and injection molding, and the effect of the present invention can be exhibited in any molded articles.

The thus-obtained filler-containing polypropylene composition in which the pigment master batch is incorporated is superior in dispersibility of pigments and fillers and is improved in surface impact resistance and appearance (weld line and gloss).

The present invention will be explained in more detail by the following examples.

Methods for measurment of properties and conditions for production of composition were as follows.

(1) Dispersibility

A plate-like test piece of 3 mm thick was pressed under 120 bar, at 230°C for 3 minutes into a thin film sheet and then particle diameters of pigments and fillers were observed by a polarizing optical microscope at 50 x magnification, whereby dispersibility was evaluated.

Dispersibility was evaluated by the maximum particle diameter of the circle equivalents to the pigment particles observed in the field of the polarizing optical microscope according to the following grades:

| Grade | | |
|---|---|---|
| 5 | maximum particle diameter | less than 10 $\mu$m |
| 4 | " | 10 - 30 $\mu$m |
| 3 | " | 30 - 50 $\mu$m |
| 2 | " | 50 - 100 $\mu$m |
| 1 | " | greater than 100 $\mu$m |

EP 0 365 399 B1

(2) Falling weight impact test (FWI)

Measurment was conducted according to the method specified in JIS-K7211 using a plate-like test piece of 3 mm thick at 23°C.

The plate-like test piece used in the above (1) and (2) was prepared by drying a composition at 120°C for 2 hours by a hot-air drier and then injection molding the composition by an injection molding machine IS-150E-V manufactured by Toshiba Machine Co., Ltd. at a molding temperature at 220°C and a mold temperature of 50°C for an injection time of 15 seconds and a cooling time of 30 seconds.

(3) Conditions for production of composition

The composition was prepared under the following conditions unless otherwise notified.

Respective components of given amounts were weighed and homogeneously premixed by a Henschel mixer and then the mixture was extruded by continuous twin-screw extruder (TEX 44 SS 30BW-2V manufactured by Japan Steel Works, Ltd.) at an extrusion amount of 30 kg/h, a resin temperature of 220°C and a screw speed of 350 rpm under suction through vent. Screws employed were ones which were designed to have triple screw-flight type rotor portion and kneading disc portion at different positions in a kneading zone.

Examples 1 - 6 (Table 1-1, Table 1-2)

Carbon black (BLACK PEARL 800 manufactured by Cabot Corp.) or phthalocyanine blue (PHTHALOCYANINE BLUE GH manufactured by Sumitomo Chemical Co., Ltd.) as a pigment, magnesium stearate (SM-1000 manufactured by Sakai Chemical Co.), polyethylene wax (AC WAX manufactured by Allied Chemical Corp.) or polypropylene wax (HOECHST WAX PP-230 manufactured by Hoechst Aktiengesellschaft) as a dispersion medium were ground and mixed at a high speed at the mixing ratio as shown in Table 1-1 and furthermore, kneaded by a kneader with polypropylene (NOBLEN® Z101A (MFR = 20) or Y101 (MFR = 12) manufactured by Sumitomo Chemical Co., Ltd.) which was a propylene homopolymer at the given ratio and ground to obtain a pigment master batch. Further, NOBLEN® AX 574 (MFR = 45) (manufactured by Sumitomo Chemical Co., Ltd.) as propylene-ethylene block copolymer, NOBLEN® Z101A (manufactured by Sumitomo Chemical Co., Ltd.) as propylene homopolymer and TAFMER ® P-0280 (manufactured by Mitsui Petrochemical Industries, Ltd.) as ethylene-propylene copolymer rubber, and MICRONWHITE 5000S (manufactured by Hayashi Kasei Co.) as talc filler were used.

The above raw materials were mixed at the ratio as shown in Table 1-2 and compositions were prepared therefrom under the above kneading conditions. Test pieces were prepared therefrom under the above injection molding conditions. These test pieces were evaluated by the above evaluation method. The results are shown in Table 1-2.

All of them showed good dispersibility and good falling weight impact resistance.

Comparative Examples 1 - 10 (Table 2-1, Table 2-2)

The same pigments and the same dispersion media as used in Examples 1 - 6 were subjected to high speed mixing and grinding at the ratio as shown in Table 2-1 to obtain master powders of Comparative Examples 4 - 7.

Separately, pigment master batches were prepared by kneading at the ratio as shown in Table 2-1 using NOBLEN® D501 (MFR = 0.5 manufactured by Sumitomo Chemical Co., Ltd.) or NOBLEN® H501 (MFR = 3.5 manufactured by Sumitomo Chemical Co., Ltd.) as propylene homopolymer, or SUMITOMO NOBLEN® AW 564 (MFR = 8 manufactured by Sumitomo Chemical Co., Ltd.), SUMITOMO NOBLEN® AY564 (MFR = 8 manufactured by Sumitomo Chemical Co., Ltd.), or SUMITOMO NOBLEN® AZ564 (MFR = 8 manufactured by Sumitomo Chemical Co., Ltd.) which is propylene-ethylene block copolymer to obtain pigment master batches.

In the same manner as in Example 1 - 6, compositions were prepared using the above master powders and pigment master batches at the mixing ratio as shown in Table 2-2 and evaluation was conducted. The results of evaluation are shown in Table 2-2.

The test pieces were all inferior in dispersibility as compared with those of Examples 1 - 6, and falling weight impact resistance (FWI) thereof also did not reach practical level.

4

Table 1 - 1

| Name of component / Composition No. | Formulation of pigment | | | | | |
|---|---|---|---|---|---|---|
| | Coloring component | | Dispersion medium | | Resin | |
| | Kind of pigment | Part by weight | Kind of dispersant | Part by weight | Propylene homopolymer ® | Part by weight |
| Example 1 | Carbon black | 15 | Magnesium stearate | 15 | SUMITOMO NOBLEN Z101A | 70 |
| Example 2 | ditto | 25 | Polyethylene wax | 25 | ditto | 50 |
| Example 3 | ditto | 25 | Polypropylene wax | 25 | ditto | 50 |
| Example 4 | Phthalocyanine blue | 15 | Magnesium stearate | 15 | ditto | 70 |
| Example 5 | ditto | 25 | Polyethylene wax | 25 | ditto | 50 |
| Example 6 | Carbon black | 25 | ditto | 25 | SUMITOMO NOBLEN ® Y101 | 50 |

EP 0 365 399 B1

Table 1 - 2

| Name of component | Formulation of composition | | | | | | | | | Evaluation | |
|---|---|---|---|---|---|---|---|---|---|---|---|
| | Propylene-ethylene block copolymer | | Propylene homopolymer | | Ethylene-propylene co-polymer rubber | | Filler | | Amount of pigment | Dispers-ibility | FWI |
| Composition No. | Kind | Wt% | Kind | Wt% | Kind | Wt% | Kind | Wt% | Part by weight | - | kg·cm |
| Example 1 | SUMITOMO NOBLEN Ⓡ AX 574 | 40 | SUMITOMO NOBLEN Ⓡ Z101A | 35 | TAFMERⓇ P-0280 | 5 | Talc | 20 | 3.6 | 5 | 250 |
| Example 2 | ditto | 40 | ditto | 35 | ditto | 5 | ditto | 20 | 3.6 | 5 | 270 |
| Example 3 | ditto | 40 | ditto | 35 | ditto | 5 | ditto | 20 | 3.6 | 5 | 250 |
| Example 4 | ditto | 40 | ditto | 35 | ditto | 5 | ditto | 20 | 3.6 | 5 | 240 |
| Example 5 | ditto | 40 | ditto | 35 | ditto | 5 | ditto | 20 | 3.6 | 5 | 250 |
| Example 6 | ditto | 40 | ditto | 35 | ditto | 5 | ditto | 20 | 3.6 | 5 | 270 |

EP 0 365 399 B1

Table 2 - 1

| Name of component | Formulation of pigment | | | | | |
| --- | --- | --- | --- | --- | --- | --- |
| | Coloring component | | Dispersion medium | | Resin | |
| Composition No. | Kind of pigment | Part by weight | Kind of dispersant | Part by weight | Kind of resin | Part by weight |
| Comparative Example 1 | Carbon black | 25 | Polyethylene wax | 25 | SUMITOMO NOBLEN® D501 | 50 |
| Compartive Example 2 | ditto | 25 | ditto | 25 | SUMITOMO NOBLEN® H501 | 50 |
| Comparative Example 3 | Phthalocyanine blue | 25 | ditto | 25 | SUMITOMO NOBLEN® H501 | 50 |
| Comparative Example 4 | Carbon black | 50 | Magnesium stearate | 50 | – | – |
| Comparative Example 5 | ditto | 50 | Polyethylene wax | 50 | – | – |
| Comparative Example 6 | ditto | 50 | Polypropylene wax | 50 | – | – |
| Comparative Example 7 | Phthalocyanine blue | 50 | Polyethylene wax | 50 | – | – |
| Comparative Example 8 | Carbon black | 25 | ditto | 25 | SUMITOMO NOBLEN® AW564 | 50 |
| Comparative Example 9 | ditto | 25 | ditto | 25 | SUMITOMO NOBLEN® AY564 | 50 |
| Comparative Example 10 | ditto | 25 | ditto | 25 | SUMITOMO NOBLEN® AZ564 | 50 |

EP 0 365 399 B1

Table 2 - 2

| Name of component | Formulation of composition | | | | | | | | | Evaluation | |
|---|---|---|---|---|---|---|---|---|---|---|---|
| | Propylene-ethylene block copolymer | | Propylene homopolymer | | Ethylene-propylene co-polymer rubber | | Filler | | Amount of pigment | Dispersibility | FWI |
| Composition No. | Kind | Wt% | Kind | Wt% | Kind | Wt% | Kind | Wt% | Part by weight | − | kg·cm |
| Comparative Example 1 | SUMITOMO NOBLEN® AX 574 | 40 | SUMITOMO NOBLEN® Z101A | 35 | TAFMER® P-0280 | 5 | Talc | 20 | 3.6 | 2 | 180 |
| Comparative Example 2 | ditto | 40 | ditto | 35 | ditto | 5 | ditto | 20 | 3.6 | 3 | 220 |
| Comparative Example 3 | ditto | 40 | ditto | 35 | ditto | 5 | ditto | 20 | 3.6 | 3 | 210 |
| Comparative Example 4 | ditto | 40 | ditto | 35 | ditto | 5 | ditto | 20 | 1.1 | 1 | 110 |
| Comparative Example 5 | ditto | 40 | ditto | 35 | ditto | 5 | ditto | 20 | 1.8 | 2 | 120 |
| Comparative Example 6 | ditto | 40 | ditto | 35 | ditto | 5 | ditto | 20 | 1.8 | 2 | 100 |
| Comparative Example 7 | ditto | 40 | ditto | 35 | ditto | 5 | ditto | 20 | 1.8 | 2 | 140 |
| Comparative Example 8 | ditto | 40 | ditto | 35 | ditto | 5 | ditto | 20 | 3.6 | 3 | 220 |
| Comparative Example 9 | ditto | 40 | ditto | 35 | ditto | 5 | ditto | 20 | 3.6 | 3 | 230 |
| Comparative Example 10 | ditto | 40 | ditto | 35 | ditto | 5 | ditto | 20 | 3.6 | 3 | 230 |

As explained above, the filler-containing polypropylene resin composition which contains the pigment master batch of the present invention is superior in dispersibility and exhibits conspicuous effect in balance of properties, especially in surface impact resistance even in the case of simultaneous color compounding of fillers, polypropylene resins and pigment master batches.

EP 0 365 399 B1

The resin composition provided by the present invention can be easily processed to shaped articles, sheets, by molding methods such as injection molding and extrusion molding commonly used for molding of thermoplastic resins and the resulting artices are good in balance of properties such as heat resistance, impact resistance and rigidity and have excellent appearance such as smoothness.

## Claims

1. A process for obtaining a pigment master batch for filler-containing polypropylene compositions, which comprises 100 parts by weight of a propylene homopolymer (C) having a melt flow rate MFR 230/2 of at least 10 g/10 min. and 30 - 200 parts by weight of a processed pigment comprising for 100 parts by weight of a pigment (A) 30 - 70 parts by weight of a dispersion medium (B) selected from the group consisting of a metallic salt of fatty acid, a polyethylene wax and a polypropylene wax, characterized in that, in a first step, (A) and (B) are kneaded to prepare processed pigment and in a second step, (C) is mixed and kneaded with the processed pigment.

2. A process according to claim 1, wherein the propylene homopolymer (C) has a melt flow rate MFR 230/2 of 15 - 100 g/10 min.

3. A process according to claim 1, wherein the dispersion medium (B) is calcium stearate or calcium laurate.

4. A process according to claim 1, wherein the dispersion medium (B) is a polyethylene wax having a molecular weight of 500 - 20,000.

5. A process according to claim 1, wherein the dispersion medium (B) is a polypropylene wax having a molecular weight of 1,000 - 20,000.

6. A filler-containing polypropylene composition which contains the pigment master batch obtained by the process according to claim 1.

7. A filler-containing polypropylene composition according to claim 6, wherein the filler is talc, mica or calcium carbonate.

8. A filler-containing polypropylene composition according to claim 6, which contains a synthetic rubber.

## Patentansprüche

1. Verfahren zur Herstellung eines Pigmentmasterbatch für füllstoffhaltige Polypropylenmassen, umfassend 100 Gew.-Teile eines Propylenhomopolymers (C) mit einem Schmelzindex MFI 230/2 von mindestens 10 g/10 Min. und 30 - 200 Gew.-Teile eines behandelten Pigments, umfassend pro 100 Gew.-Teile eines Pigments (A) 30 - 70 Gew.-Teile eines Dispersionsmediums (B), ausgewählt aus einem Metallsalz einer Fettsäure, einem Polyethylenwachs und einem Polypropylenwachs, dadurch gekennzeichnet, daß in einem ersten Schritt (A) und (B) zur Herstellung eines behandelten Pigments geknetet werden, und in einem zweiten Schritt (C) mit dem behandelten Pigment gemischt und geknetet wird.

2. Verfahren nach Anspruch 1, wobei das Propylenhomopolymer (C) einen Schmelzindex MFI 230/2 von 15 - 100 g/10 Min. aufweist.

3. Verfahren nach Anspruch 1, wobei das Dispersionsmedium (B) Calciumstearat oder Calciumlaurat ist.

4. Verfahren nach Anspruch 1, wobei das Dispersionsmedium (B) ein Polyethylenwachs mit einem Molekulargewicht von 500 - 20000 ist.

5. Verfahren nach Anspruch 1, wobei das Dispersionsmedium (B) ein Polypropylenwachs mit einem Molekulargewicht von 1000 - 20000 ist.

**6.** Füllstoffhaltige Polypropylenmasse, die den mit dem Verfahren nach Anspruch 1 erhaltenen Pigmentmasterbatch enthält.

**7.** Füllstoffhaltige Polypropylenmasse nach Anspruch 6, in der der Füllstoff Talkum, Glimmer oder Calciumcarbonat ist.

**8.** Füllstoffhaltige Polypropylenmasse nach Anspruch 6, die einen synthetischen Kautschuk enthält.

**Revendications**

**1.** Procédé pour obtenir un mélange-maître pigmentaire pour des compositions de polypropylène chargées, qui comprend 100 parties en poids d'un homopolymère de propylène (C) ayant un indice de fluidité MFR 230/2 d'au moins 10 g/10 min, et 30 à 200 parties en poids d'un pigment traité, comprenant pour 100 parties en poids d'un pigment (A) 30 à 70 parties en poids d'un milieu de dispersion (B) choisi parmi l'ensemble comprenant les sels métalliques des acides gras, les cires de polyéthylène et les cires de polypropylène, caractérisé en ce que, dans une première étape, on malaxe (A) et (B) pour préparer un pigment traité, et, dans une deuxième étape, on mélange le constituant (C) et on malaxe avec le pigment traité.

**2.** Procédé selon la revendication 1, dans lequel l'homopolymère du propylène (C) a un indice de fluidité MFR 230/2 de 15 à 100 g/10 min.

**3.** Procédé selon la revendication 1, dans lequel le milieu de dispersion (B) est le stéarate de calcium ou le laurate de calcium.

**4.** Procédé selon la revendication 1, dans lequel le milieu de dispersion est une cire de polyéthylène ayant une masse moléculaire de 500 à 20 000.

**5.** Procédé selon la revendication 1, dans lequel le milieu de dispersion (B) est une cire de polypropylène ayant une masse moléculaire de 1000 à 20 000.

**6.** Composition de polypropylène chargée contenant le mélange-maître pigmentaire obtenu par le procédé selon la revendication 1.

**7.** Composition de polypropylène chargée selon la revendication 6, dans laquelle la charge est le talc, le mica ou le carbonate de calcium.

**8.** Composition de polypropylène chargée selon la revendication 6, qui contient un caoutchouc synthéti-que.